Europäisches Patentamt

European Patent Office

Office européen des brevets

(11) Numéro de publication: **0 353 112**
**A1**

## (12) DEMANDE DE BREVET EUROPEEN

(21) Numéro de dépôt: 89401789.6

(22) Date de dépôt: 23.06.89

(51) Int. Cl.⁵: **H 02 M 3/335**
H 02 M 3/28

(30) Priorité: 29.07.88 FR 8810260

(43) Date de publication de la demande:
31.01.90 Bulletin 90/05

(84) Etats contractants désignés: **DE ES GB IT NL**

(71) Demandeur: **THOMSON-CSF**
**51, Esplanade du Général de Gaulle**
**F-92800 Puteaux (FR)**

(72) Inventeur: **Lannuzel, Roger**
**THOMSON-CSF SCPI - CEDEX 67**
**F-92045 Paris la Défense (FR)**

(74) Mandataire: **Desperrier, Jean-Louis et al**
**THOMSON-CSF SCPI**
**F-92045 PARIS LA DEFENSE CEDEX 67 (FR)**

(54) **Convertisseur de tension continu/continu de type Cük, et alimentation secteur à conversion directe réalisée à partir d'un tel convertisseur.**

(57) Ce convertisseur est du type Cük, c'est-à-dire comportant :
- côté primaire (10), un premier circuit série inductance-capacité-enroulement (11,12,13) et un organe actif de commutation (14),
- côté secondaire (20), un second circuit série inductance-capacité-enroulement (21,22,23) et un organe passif de commutation (24), et
- un circuit de commande (30) de l'organe actif de commutation, délivrant périodiquement à celui-ci des impulsions de commande avec une largeur variable en fonction d'un signal d'erreur, ce circuit de commande comprenant un générateur de rampes (120) et un comparateur (130) comparant le niveau instantané de la rampe ($V_{rampe}$) à un niveau de seuil ($V_{seuil}$) fonction du signal d'erreur.

Selon l'invention, la pente de chaque rampe varie en fonction de la tension d'entrée et elle est indépendante de la tension de sortie, le niveau de seuil est fonction du signal d'erreur, et les impulsions de commande sont produites entre un instant fixe correspondant au début de chaque rampe et un instant variable correspondant au basculement du circuit comparateur.

La variation de pente du générateur de rampe est commandée par une tension de commande ($V_c$) prélevée au point milieu d'un pont diviseur (111,112) monté en série avec une référence de tension (113), l'ensemble étant porté à une tension égale ou proportionnelle à la tension d'entrée ($V_e$) ; les valeurs de ces éléments (111,112,113) sont choisies de manière que la tension de sortie produite par le convertisseur sous le contrôle du circuit de commande soit rendue essentiellement indépendante de la tension d'entrée.

Cette régulation en boucle ouverte assure une stabilité parfaite du système, avec un temps de réponse très inférieur à celui des convertisseurs Cük classiques.

FIG.8

EP 0 353 112 A1

**Description**

# Convertisseur de tension continu/continu de type Cük, et alimentation secteur à conversion directe réalisée à partir d'un tel convertisseur

La présente invention concerne les convertisseurs de tension continu/continu du type dit "Cük".

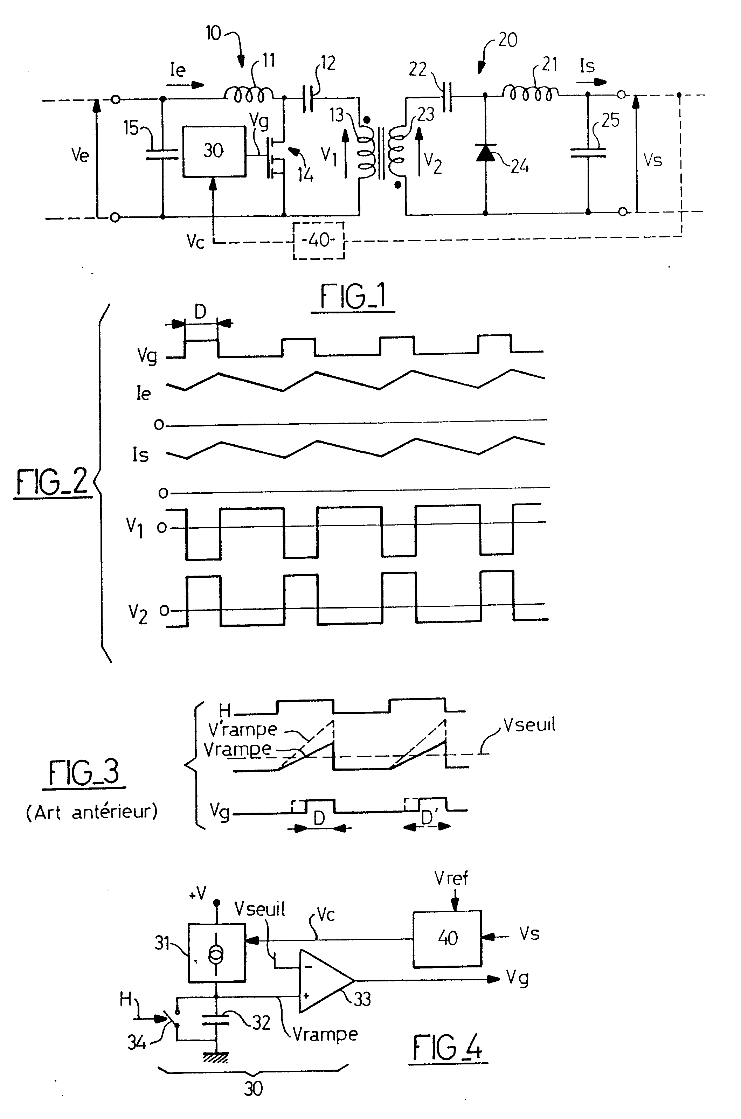

Le schéma général des convertisseurs de ce type est illustré figure 1.

Du côté du primaire, un premier circuit comportant en série une inductance 11, un condensateur 12 et un enroulement primaire de transformateur 13 reçoit à ses bornes la tension d'entrée $V_e$. Le condensateur 12 et l'enroulement 13 peuvent être mis en court-circuit de façon périodique sous le contrôle d'un circuit de commande 30 pilotant un organe actif de commutation 14 tel qu'un transistor (généralement un MOS de puissance).

Du côté du secondaire 20, on retrouve un circuit semblable, comportant un second circuit série avec une inductance 21, un condensateur 22 et l'enroulement secondaire 23 du transformateur, circuit dans lequel le condensateur 22 et l'enroulement 23 peuvent être mis en court-circuit par un organe passif de commutation, généralement une diode 24 montée en diode de roue libre.

On notera que les enroulements 13 et 23 du transformateur peuvent être des enroulements virtuels, si l'on souhaite un rapport de transformation 1:1 et que l'on a pas besoin d'isolement galvanique ; il suffit alors de remplacer les enroulements par deux fils croisés réunissant le primaire et le secondaire, ou deux fils non croisés, ce qui donne en sortie une tension $-V_s$ mais permet de réunir en un seul condensateur les deux condensateurs 12 et 22.

Bien que, dans la suite, on considèrera toujours le transformateur et ses enroulements, la présente invention n'est pas limitée aux convertisseurs Cük comportant effectivement un transformateur, mais s'applique aussi bien aux convertisseurs Cük dans lequel les enroulements sont virtuels, toutes choses identiques par ailleurs.

Le fonctionnement général d'un convertisseur Cük est le suivant : lorsque le transistor 14 est conducteur, la tension d'entrée $V_e$ est appliquée aux bornes de l'inductance 11, ce qui a pour effet de charger celle-ci ; en même temps, ce transistor en conduction relie le condensateur 12 aux bornes de l'enroulement 13, ce qui a pour effet d'appliquer une tension négative sur les bornes du transformateur (le condensateur avait été chargé à une tension $-V_e$ au cours du cycle précédent). Simultanément, on va retrouver au secondaire 23 du transformateur une tension $V_2$ proportionnelle à la tension $V_1$ appliquée au primaire (ou égale, si le transformateur est de rapport 1:1), mais de signe opposé, car les deux enroulements du transformateur sont bobinés en sens inverse ; la diode de roue libre 24 va donc se trouver polarisée dans le sens où elle est conductrice, de sorte que la tension $-V_2$ va charger le condensateur 22.

Lorsque le transistor 14 ne sera plus conducteur, c'est-à-dire lorsque le circuit de commande 30 va mettre fin à l'impulsion $V_g$ qui assurait la conduction, l'inductance 11 va se décharger dans le condensateur 12, qui va alors se trouver porté entre ses bornes à la tension $V_e$. Côté secondaire, du fait de l'inversion de polarité, la diode 24 va se trouver polarisée dans le sens bloqué, de sorte que le condensateur 22 va se décharger dans l'inductance 21. Au secondaire on aura donc addition des courants de décharge des deux condensateurs, l'un directement, l'autre via le transformateur.

La figure 2 montre l'allure des différents signaux obtenus au rythme des impulsions de commande $V_g$ délivrées par le circuit de commande 30 (une impulsion, de durée D, correspondant à la condition de conduction du transistor 14).

Ce type de convertisseur présente deux avantages typiques.

En premier lieu, les courants en entrée et en sortie, respectivement référencés $I_e$ et $I_s$, présentent une faible ondulation résiduelle : cette propriété, qui est inhérente au fonctionnement du convertisseur, est obtenue même en l'absence de tout filtrage, de sorte qu'il suffira de prévoir des condensateurs 15 et 25 de faible valeur en entrée et en sortie pour éliminer cette simple composante résiduelle.

Au contraire, dans les convertisseurs continu/continu fonctionnant sur d'autres principes (notamment les systèmes à découpage tels que les convertisseurs dits *flyback* ou *forward*), le hachage du courant en entrée produit une très forte ondulation aussi bien en entrée qu'en sortie, et donc un parasitage important aussi bien sur les lignes d'entrée que de sortie, de sorte qu'il est nécessaire de prévoir des condensateurs réservoirs de capacité très importante ainsi que des inductances ballast pour éviter que les lignes ne soient pas trop perturbées en amont et en aval-alors que, au contraire, le convertisseur Cük est par essence un convertisseur sans filtrage.

En second lieu, on constate que le transformateur travaille toujours en alternatif, sans aucune composante continue puisqu'il y a toujours un condensateur en série avec l'enroulement 13 (c'est-à-dire que la tension moyenne est nulle) ; ainsi, comme le point de repos correspondra à une tension nulle, on pourra disposer d'une très grande excursion de tension avant de saturer le transformateur, de sorte que, même avec un transformateur de très petite taille, on pourra toujours se placer très en deçà de cette limite de saturation.

Par ailleurs, le fait que l'on ait, de la même façon, un signal alternatif au secondaire permet de placer en série avec l'enroulement secondaire des transformateurs d'intensité pour mesurer le courant de sortie, évitant ainsi le recours à des shunts qui produisent, par principe, des chutes de tension augmentant l'impédance interne du convertisseur.

En revanche, les convertisseurs de type Cük présentent l'inconvénient que la valeur de la tension de sortie n'est pas, comme dans les convertisseurs à découpage, proportionnelle à la largeur des impulsions de commande (c'est-à-dire donnée par une expression simple de la forme $V_s = k.D.V_e$), mais donnée par une expression non linéaire de la forme suivante (si l'on suppose un rapport de transformation de 1:1) :

$$V_s = V_e . [D/(1-D)] \quad (1)$$

D étant la durée ou "largeur" de l'impulsion $V_g$ (exprimée en termes de rapport cyclique) correspondant à la durée de mise en conduction du transistor 14.

Il est par ailleurs nécessaire de prévoir une régulation du convertisseur afin de pouvoir, en contrôlant la délivrance des impulsions dans le circuit de commande 30, faire varier la tension de sortie $V_s$ de manière à compenser d'une part les variations de la charge en sortie, et d'autre part les variations de la tension d'entrée.

Jusqu'à présent, ceci était réalisé par une boucle de régulation 40 (figure 1) recevant en entrée la tension de sortie $V_s$ et modifiant une tension de commande $V_c$ du circuit de commande 30 en fonction de l'écart mesuré entre cette tension de sortie $V_s$ et une tension de consigne de référence donnée.

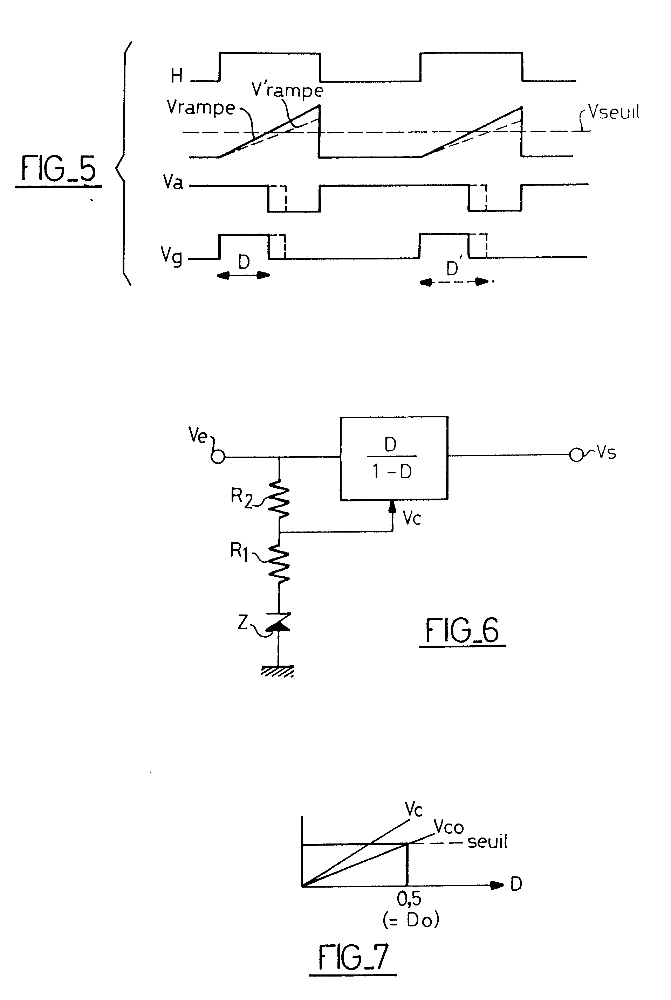

Le schéma général des circuits de régulation de l'art antérieur et les différents signaux délivrés sont donnés aux figures 3 et 4.

Une boucle de régulation 40 reçoit d'une part la tension de sortie $V_s$ mesurée et d'autre part une tension de référence $V_{ref}$, et délivre en sortie un signal de commande $V_c$ permettant de contrôler le fonctionnement d'un générateur de rampe constitué d'un générateur de courant 31 chargeant un condensateur 32. La tension de rampe $V_{rampe}$ obtenue est représentée à la figure 3, où l'on peut voir que le début de la rampe est synchronisé sur chaque impulsion d'horloge H, impulsion qui détermine également la fin de la rampe. La pente de la rampe variera en fonction du signal d'erreur $V_c$, et l'on comparera au moyen d'un comparateur 33 la tension instantanée $V_{rampe}$ de la rampe à une tension de seuil $V_{seuil}$, fixe. Le signal de sortie de ce comparateur 33 constituera l'impulsion de commande $V_g$ permettant de mettre le transistor 14 à l'état conducteur. On voit que le début de l'impulsion de commande $V_g$ est déterminé par l'instant, variable, où la tension $V_{rampe}$ atteint le niveau $V_{seuil}$, tandis que la fin de l'impulsion de commande $V_g$ correspond toujours à la fin de l'impulsion d'horloge H, c'est-à-dire l'instant où un commutateur 34, piloté par le signal d'horloge, remet à zéro la tension aux bornes du condensateur 32.

De la sorte, si la tension de sortie $V_s$ vient à diminuer (soit du fait d'une augmentation de la charge, soit du fait d'une diminution de la tension d'entrée $V_e$), la pente de la rampe va se redresser, prenant l'allure indiqué par $V'_{rampe}$ et donc allongeant de façon concomitante la durée de l'impulsion de D à D', ce qui aura pour effet de relever la tension de sortie, compensant ainsi la chute de tension détectée.

On constate cependant que, avec ce circuit de commande et de régulation de l'art antérieur, on se trouve inéluctablement obligé de trouver un compromis entre :

- d'une part la précision de la régulation, qui sera d'autant plus élevée que le gain de la boucle de régulation 40 sera élevé, et
- d'autre part la nécessité d'éviter les instabilités du système, qui est une régulation en boucle fermée, donc stable seulement sous certaines conditions ; ceci oblige à prévoir une marge de gain ou de phase suffisante, donc à réduire la précision et à allonger la constante de temps de la régulation.

En pratique, on utilise généralement des réseaux de stabilisation placés dans la boucle qui réduisent la bande passante du système afin d'éviter les instabilités - mais, corrélativement, ces réseaux réduisent d'autant le temps de réponse du convertisseur à une variation de la tension d'entrée $V_e$.

Or, en pratique, on constate que les variations de charge sont le plus souvent relativement faibles (lorsque les convertisseurs alimentent un ensemble de cartes électroniques ou circuits analogues), tandis que les variations les plus importantes sont celles de la tension d'entrée $V_e$, qui peuvent être dûes à un secteur instable (convertisseur alimenté sur le secteur), à des pics ou des effondrements brusques de tension provoqués par la mise en route en amont d'un appareil gros consommateur, etc.

On constate que, dans le cas où de telles sources d'alimentation très instables - cas fréquent pour les appareils embarqués sur des aéronefs, remorqués loin de leur source d'énergie, etc. -, un pic ou un brusque effondrement de tension en entrée se retrouvera, bien qu'atténué, toujours en sortie, du fait de l'incapacité du circuit de régulation à prendre en compte des variations de très courte durée, puisqu'il est nécessaire de prévoir une constante de temps minimale de la boucle pour assurer la stabilité du système.

L'un des buts de la présente invention est de remédier à ces divers inconvénients, en proposant un système de régulation et de commande qui, sans compromis sur la stabilité, permette d'avoir un temps de réponse très faible, qui soit même très inférieur à la période d'horloge.

A cet effet, la présente invention propose un système de commande et de régulation pour convertisseur Cük fonctionnant en boucle ouverte - donc toujours stable, quelles que soient ses conditions de fonctionnement -c'est-à-dire dans lequel la tension de commande $V_c$ est rendue indépendante de la tension d'entrée $V_e$.

Du fait que, comme on l'a indiqué plus haut, les variations les plus importantes sont celles de la tension d'entrée, ces variations seront sans incidence sur la tension de commande $V_c$, de sorte que l'on pourra réduire le gain de la boucle de régulation - et donc en augmenter la bande passante -, car on n'aura plus à compenser que les seules variations de charge pour pouvoir déterminer la tension de commande.

A cet effet, de façon caractéristique de l'invention :
- la pente de chaque rampe varie en fonction de la tension d'entrée et elle est indépendante de la tension de sortie,
- le niveau de seuil est fonction du signal d'erreur, et
- les impulsions de commande sont produites entre un instant fixe correspondant au début de chaque rampe et un instant variable correspondant au basculement du circuit comparateur.

Très avantageusement, la variation de pente du générateur de rampe est commandée par une tension de commande prélevée au point milieu d'un pont diviseur, le pont diviseur étant monté en série avec une référence de tension et l'ensemble pont diviseur/référence de tension étant porté à une tension égale ou proportionnelle à la tension d'entrée, et les valeurs des éléments du pont diviseur et de la référence de tension sont choisies de manière que la tension de sortie produite par le convertisseur sous le contrôle du circuit de commande soit rendue essentiellement indépendante de la tension d'entrée.

La présente invention s'applique également, de façon très avantageuse, la la réalisation d'une alimentation secteur à conversion directe, comprenant un convertisseur de tension du type précité recevant directement en entrée la tension secteur, la fréquence de répétition des impulsions de commande du circuit de commande étant notablement supérieure à la fréquence du secteur.

D'autres caractéristiques et avantages de l'invention apparaîtront à la lecture de la description détaillée ci-dessous, faite en référence aux dessins annexés sur lesquels :

    - la figure 1, précitée, montre le principe d'un convertisseur Cük, auquel s'applique la présente invention,

    - la figure 2, également précitée, montre divers signaux produits par le convertisseur de la figure 1,

    - la figure 3, également précitée, montre les signaux de commande qui avaient été proposés jusqu'à présent pour piloter le convertisseur de la figure 1,

    - la figure 4, également précitée, montre un circuit de l'art antérieur permettant de générer les signaux de la figure 3,

    - la figure 5 est homologue de la figure 3, pour une commande réalisée selon les enseignements de l'invention,

    - la figure 6 montre le circuit permettant de dériver la tension de commande $V_c$ à partir de la tension d'entrée, indépendamment de la tension de sortie,

    - la figure 7 montre la variation de pente en fonction de la durée d'impulsion, et

    - la figure 8 montre un exemple de réalisation d'un convertisseur Cük piloté par un circuit de commande et de régulation selon la présente invention.

La figure 5 montre, de façon schématique, les signaux de commande permettant de piloter, de façon caractéristique de la présente invention, le convertisseur Cük par une tension de commande indépendante de la tension d'entrée.

A cet effet, à la différence de l'art antérieur illustré figure 3, on fait ici commencer l'impulsion $V_g$ à un instant fixe, correspondant au début du signal d'horloge H, et on la termine à un instant variable fonction de l'instant, variable, auquel le niveau instantané de la tension de rampe $V_{rampe}$ atteint le niveau d'une tension de seuil $V_{seuil}$.

Si D est la durée entre le début de la rampe et le franchissement du seuil, on constate que D est inversement proportionnelle à la tension de commande de la rampe (ceci également à la différence de l'art antérieur) : en effet, si par exemple la tension vient à diminuer il faudra allonger la durée de l'impulsion, donc prévoir une tension de rampe $V'_{rampe}$ de plus faible pente.

De façon également caractéristique de la présente invention, on va chercher à faire en sorte que la tension de commande ne dépende que de la tension d'entrée $V_e$, et soit indépendante de la tension de sortie $V_s$.

Ceci permettra de diminuer de façon considérable le gain de la boucle de régulation, qui ne devra plus compenser que les variations de la charge en sortie qui, comme on l'a vu, sont en général peu importantes et lentes.

On pourra prévoir alors une boucle à faible gain et forte correction, très stable, qui n'aura d'action que sur le niveau de la tension de seuil $V_{seuil}$ (fonction du signal d'erreur entre la tension de sortie $V_s$ et une tension de consigne $V_{ref}$), tandis que les variations de la tension d'entrée, qui sont très abruptes et très soudaines, seront entièrement prises en compte par le circuit de commande de la rampe, donc prises en compte sans aucun retard, d'autant plus que, si l'on rend la génération de la rampe indépendante de la tension de sortie $V_s$, le générateur de rampe sera un circuit en boucle ouverte, donc toujours stable.

Les variations de la tension d'entrée produiront une variation de la pente de la rampe, qui se traduiront par un raccourcissement ou un allongement immédiat de l'impulsion en cours sans attendre, comme c'était le cas avec le circuit de l'art antérieur, l'impulsion d'horloge suivante, ce qui permettra d'éliminer toutes les variations très brèves de la tension d'entrée, même si leur durée est de quelques microsecondes seulement, c'est à dire inférieures à la période d'horloge.

L'une des difficultés, avec un tel mode de régulation, est cependant dû au fait que, dans les convertisseurs Cük, la tension de sortie n'est pas proportionnelle à la durée de l'impulsion, mais est de la forme $V_e.[D/(1-D)]$, comme on l'a indiqué plus haut.

Une simple commande de type *feed-forward* telle que celle utilisée pour les autres types de convertisseurs où la tension de sortie est proportionnelle à la durée de l'impulsion n'est donc pas transposable au cas du convertisseur Cük, pour lequel on est en présence d'une fonction non linéaire, où ni le taux d'accroissement de $V_s$ en fonction de D, ni l'inverse de ce taux ne sont constants, ce qui exclut toute régulation par application directe d'une tension de commande directement liée à la tension d'entrée.

Pour résoudre ce problème, l'invention propose de générer la tension de commande $V_c$ au moyen du circuit illustré schématiquement figure 6, c'est-à-dire comprenant un pont diviseur $R_2,R_1$ en série avec une référence de tension Z (par exemple une diode Zener) ; l'ensemble $R_2$, $R_1$ et Z reçoit à ses bornes la tension d'entrée $V_e$, et on prélève la tension de commande entre $R_1$ et $R_2$.

On va maintenant montrer comment ce circuit permet d'obtenir une tension de sortie indépendante de la tension d'entrée.

Par commodité, on va se donner une valeur moyenne de durée d'impulsion $D_o$ de 0,5 période d'horloge par exemple (cette valeur $D_0$ est avantageuse car elle correspond à un rapport $D/(1-D) = 1$ soit une tension de sortie égale à la tension d'entrée. En tout état de cause, on évitera de prendre des valeurs de D supérieures à 0,5 pour éviter une instabilité du système ou un fonctionnement dans des zones de saturation ; en pratique, on choisit généralement pour $D_0$ une valeur comprise entre 0 et 0,5.

Si à cette valeur $D_o = 0,5$ correspond une tension de commande $V_c = V_{co}$ (que l'on se donne par commodité en fonction des circuits à calculer, par exemple $V_{co} = 10$ V), la valeur de D sera donnée, dans le cas général (figure 7) par :
$$D = D_o . (V_{co}/V_c)$$

Si l'on considère le circuit de la figure 6, la tension $V_c$ aux bornes de $R_1$ et Z est donnée, en fonction de la tension $V_e$ aux bornes de $R_2$, $R_1$ et Z par:
$$V_c = (V_e.R_1 + V_z.R_2)/(R_1 + R_2) \quad (2)$$

Si l'on remplace $V_c$ par cette expression dans l'expression précédente donnant D, on obtient:
$$V_s = [V_e D_o V_{co} \quad (R_1 + R_2)]/[V_e R_1 + V_z R_2 - D_o V_{co} (R_1 + R_2)] \quad (3)$$

En pratique, $D_o$ et $V_{co}$ étant donnés au préalable comme indiqué plus haut, on peut choisir les valeurs relatives de $R_1$, $R_2$ et $V_z$ pour que l'on ait :
$$V_z R_2 = D_o V^{co} (R_1 + R_2) \quad (4)$$

Généralement, on se fixe $V_z$, ce qui donne une relation entre $R_1$ et $R_2$, facile à ajuster, par exemple au moyen d'une résistance ajustable.

Il vient alors :
$$V_s = [D_o V_{co} (R_1 + R_2)]/R_1 = \text{constante} \quad (5)$$

On constate que la tension de sortie $V_s$ est devenue indépendante de la tension d'entrée.

D'après les relations (4) et (5), on pourra tirer toutes les grandeurs définissant le circuit en se fixant au départ Z, $D_o,V_{co},V_s$, etc.

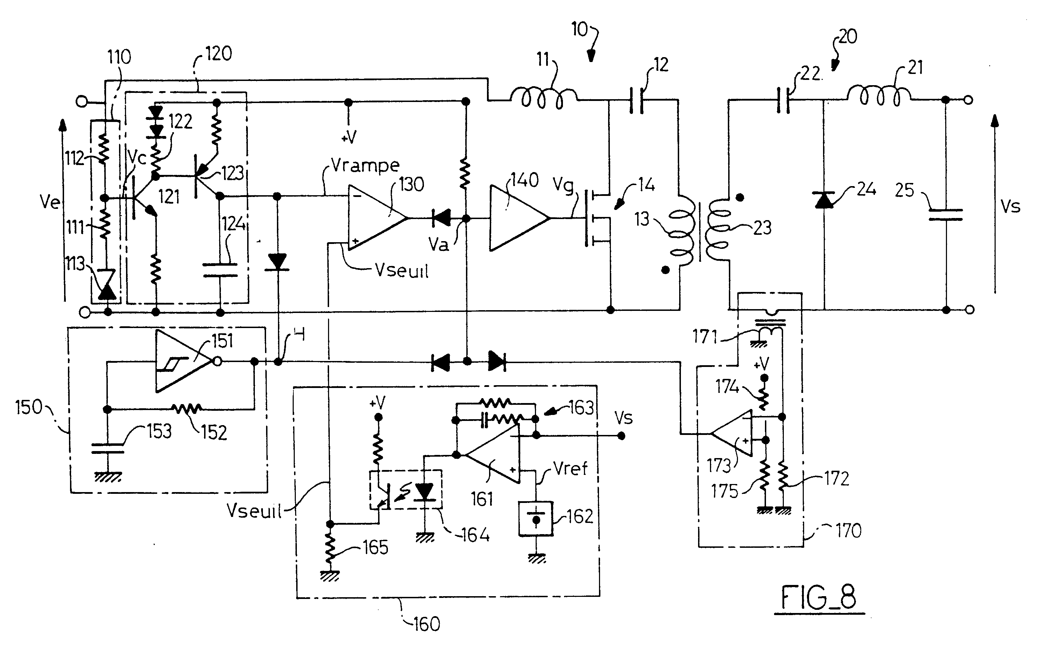

La figure 8 donne un exemple de convertisseur Cük piloté par un circuit mettant en oeuvre les enseignements que l'on vient d'exposer.

Sur cette figure, les références numériques identiques à celles de la figure 1 désignent les éléments semblables à ceux de la figure 1 (essentiellement, les éléments de base d'un convertisseur de type Cük), qui ne seront pas donc décrits en détail à nouveau.

Le circuit de pilotage de la présente invention est constitué par les différents éléments de circuit référencés 110 à 170.

Le circuit 110 est le circuit, représenté isolément sur la figure 6, qui permet de dériver la tension de commande selon la loi de variation non linéaire voulue, les valeurs de la résistance $R_1$ 111, de la résistance $R_2$ 112 et de la référence de la tension (diode Zener) 113 ayant été choisies et éventuellement ajustées pour vérifier au moins approximativement la relation (4) ci-dessus.

La tension de commande $V_c$ prise au point milieu des résistances 111 et 112, et dont la variation en fonction de la tension d'entrée $V_e$ est donnée par la relation (2) ci-dessus, est appliquée à un circuit générateur de courant 120 comprenant un premier transistor NPN 121 monté en collecteur commun avec une résistance de collecteur 122 permettant de le faire fonctionner en générateur de courant, le courant de collecteur étant proportionnel à la tension $V_c$ appliquée sur la base de ce transistor.

Pour pouvoir piloter la charge d'un condensateur avec ce courant constant, on attaque le condensateur 124 par un transistor 123 de type PNP monté en inverseur, de sorte que le courant de charge du condensateur 124 monté dans son circuit de collecteur sera proportionnel à la tension de base du transistor 123, elle-même proportionnelle au courant de collecteur du transistor 121 en amont.

La tension de charge du condensateur 124, qui constitue la tension de rampe $V_{rampe}$ représentée figure 5, est appliquée à l'entrée inverseuse d'un amplificateur opérationnel 130 fonctionnant en comparateur, dont l'entrée directe reçoit la tension de seuil $V_{seuil}$.

Le signal de sortie de ce comparateur attaque un étage tampon permettant de piloter le transistor 14, avantageusement un MOS de puissance, par le signal $V_g$ illustré figure 5, c'est-à-dire par les impulsions de commande de largeur D variable.

Un multivibrateur 150, comportant un inverseur 151 avec un réseau résistance 152/capacité 153 permettant de le faire osciller à une fréquence de l'ordre de 100 kHz avec un rapport cyclique 1:1 (signal H de la figure 5), permet d'une part de décharger périodiquement le condensateur 124 et d'autre part de verrouiller la commande du transistor 14 par application du signal d'horloge à l'entrée de l'étage tampon 140 (signal $V_a$ illustré figure 5).

La tension de seuil $V_{seuil}$ est produite par un amplificateur différentiel 161 comparant la tension de sortie $V_s$ une tension de consigne $V_{ref}$ produite par une référence de tension 162. Cet amplificateur différentiel 161 comporte un réseau de stabilisation 163, pour lequel on peut prévoir une marge de gain ou de phase relativement importante du fait que l'on n'aura pas besoin d'un gain élevé pour l'amplificateur 161, la rétroaction se faisant exclusivement sur la tension d'erreur et donc sur les variations de charge qui sont habituellement faibles et lentes,comme indiqué plus haut.

Le signal de sortie de l'amplificateur différentiel 161 est transmis au comparateur 130 via un photocoupleur 164 assurant l'isolation galvanique entre primaire et secondaire du convertisseur, la tension de seuil $V_{seuil}$ étant prélevée aux bornes d'une résistance de charge 165 en série avec la sortie du photocoupleur.

Le convertisseur ainsi réalisé s'est avéré particulièrement performant.

Ainsi, pour des variations de la tension d'entrée entre 50 et 100 V, on n'a constaté des variations de la tension de sortie que de quelques millivolts, soit une stabilité meilleure que 1 ‰.

Le temps de réponse mesuré, inférieur à 5 µs, était nettement inférieur à la période du découpage, permettant ainsi de prendre en compte des variations extrêmement brèves de la tension d'entrée.

Diverses modifications peuvent être apportées au circuit de la figure 8.

On peut notamment prévoir en sortie une alimentation symétrique, avec au secondaire du transformateur deux enroulements montés en opposition, chacun étant pourvu des composants 21 à 25 montés de façon symétrique.

On peut également prévoir un circuit 170 de protection contre les surintensités utilisant un transformateur de courant 171 (un shunt n'est pas nécessaire, puisque la tension moyenne en sortie est nulle et qu'il n'y a donc pas de composante continue), le secondaire de ce transformateur débitant sur une résistance 172 dont on compare la tension aux bornes à une tension de référence fixe au moyen d'un comparateur 173 ; la tension de référence fixe est déterminée en fonction de l'intensité maximale que doit supporter le circuit, par exemple au moyen d'un pont diviseur 174,175.

Au cas où le courant au secondaire du convertisseur dépasse le seuil que l'on s'est fixé, le comparateur 173 bascule et applique alors à l'entrée de l'étage tampon 140 une impulsion qui vient neutraliser l'effet du circuit de commande. On notera que l'action de ce circuit de protection est instantanée, et qu'il peut agir même lorsqu'une impulsion de commande est en cours de délivrance.

Par ailleurs, le système de la présente invention s'applique très avantageusement à la réalisation d'alimentations secteur dites "sans transformateur" (c'est-à-dire sans transformateur fonctionnant à la fréquence du secteur) : le convertisseur est alors directement alimenté en entrée par la tension secteur $V_e$, qui variera au rythme de la fréquence secteur. Comme on a vu que les variations de la tension d'entrée n'ont pratiquement pas d'incidence sur la tension de sortie, on obtiendra (à condition bien entendu de choisir une fréquence d'horloge du circuit de commande très supérieure à la fréquence secteur) une tension au secondaire $V_s$ ne présentant qu'une faible ondulation, et ceci même en l'absence de tout condensateur de filtrage. Ceci est dû à la réponse quasi-instantanée du circuit de commande aux variations de la tension d'entrée puisque, de façon caractéristique de l'invention, on a supprimé de la boucle de rétroaction la tension d'entrée comme consigne.

On constate que, en alimentant ainsi directement le convertisseur sur le secteur, on peut se contenter d'un condensateur de filtrage 25 au secondaire de faible capacité (ce condensateur n'ayant plus qu'à filtrer l'ondulation résiduelle), typiquement trois à cinq fois moindre que dans une alimentation secteur classique, et s'affranchir de tout filtre en entrée.

## Revendications

1. Un convertisseur de tension continu/continu de type Cük, comportant:
- côté primaire (10), un premier circuit série inductance-capacité-enroulement (11,12,13) recevant à ses bornes la tension continue d'entrée ($V_e$) ainsi qu'un organe actif de commutation (14) permettant la mise en court-circuit périodique de l'ensemble série série capacité-enroulement (12,13),
- côté secondaire (20), un second circuit série inductance-capacité-enroulement (21,22,23) délivrant à ses bornes la tension continue de sortie ($V_s$), ainsi qu'un organe passif de commutation (24) permettant la mise en court-circuit de l'ensemble série capacité-enroulement (22,23), et
- un circuit de commande (30) de l'organe actif de commutation, délivrant périodiquement à celui-ci, pour le mettre en conduction, des impulsions de commande produites par un circuit générateur d'impulsions avec une largeur variable en fonction d'un signal d'erreur lui-même fonction de la différence entre la tension de sortie mesurée et une tension de sortie de consigne, ce circuit de commande comprenant un générateur de rampes périodiques (120) et un circuit comparateur (130) comparant le niveau instantané de la rampe ($V_{rampe}$) délivrée par le générateur de rampe à un niveau de seuil ($V_{seuil}$) fonction du signal d'erreur,
caractérisé en ce que :
- la pente de chaque rampe varie en fonction de la tension d'entrée et elle est indépendante de la tension de sortie,
- le niveau de seuil est fonction du signal d'erreur, et
- les impulsions de commande sont produites entre un instant fixe correspondant au début de chaque rampe et un instant variable correspondant au basculement du circuit comparateur.

2. Le convertisseur de la revendication 1, dans lequel la variation de pente du générateur de rampe est commandée par une tension de commande ($V_c$) prélevée au point milieu d'un pont diviseur (111,112), le pont diviseur étant monté en série avec une référence de tension (113) et l'ensemble pont diviseur/référence de tension étant porté à une tension égale ou proportionnelle à la tension d'entrée ($V_e$).

3. Le convertisseur de la revendication 2, dans lequel les valeurs des éléments du pont diviseur (111,112) et de la référence de tension (113) sont choisies de manière que la tension de sortie produite par le convertisseur sous le contrôle du circuit de commande soit rendue essentiellement indépendante de la tension d'entrée.

4. Une alimentation secteur à conversion directe, comprenant un convertisseur de tension selon l'une des revendications précédentes recevant directement en entrée la tension secteur, la fréquence de répétition des impulsions de commande du circuit de commande étant notablement supérieure à la fréquence du secteur.

FIG_1

FIG_2

FIG_3

(Art antérieur)

FIG_4

FIG_5

H

V'rampe

Vrampe

Vseuil

Va

Vg

D

D'

Ve

$\dfrac{D}{1-D}$

Vs

R_2

R_1

Vc

Z

FIG_6

Vc

Vco

seuil

D

0,5
(= Do)

FIG_7

FIG_8

EP 0 353 112 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-4734839 (F.O. BARTHOLD) <br> * figure 6 * <br> --- | 1 | H02M3/335 <br> H02M3/28 |
| Y | FR-A-2570898 (G.A. GAUTHERIN ET AL) <br> * page 6, lignes 6 - 20; revendication 2; figure 3 * <br> --- | 1 | |
| A | FR-A-1454422 (CROUZET) <br> * page 1, colonne de droite, lignes 21 - 39; figure 3 * <br> ----- | 1 | |

**DOMAINES TECHNIQUES RECHERCHES (Int. Cl.5 )**

H02M

Le présent rapport a été établi pour toutes les revendications

| Lieu de la recherche | Date d'achèvement de la recherche | Examinateur |
|---|---|---|
| LA HAYE | 26 OCTOBRE 1989 | MOUEZA A.J.L. |

EPO FORM 1503 03.82 (P0402)